(19) Europäisches Patentamt
European Patent Office
Office européen des brevets

(11) **EP 4 681 545 A1**

(12) **EUROPEAN PATENT APPLICATION**
published in accordance with Art. 153(4) EPC

(43) Date of publication:
**21.01.2026  Bulletin 2026/04**

(21) Application number: **24770917.3**

(22) Date of filing: **13.03.2024**

(51) International Patent Classification (IPC):
***A23C 9/123*** (2006.01)

(52) Cooperative Patent Classification (CPC):
**A23C 9/123**

(86) International application number:
**PCT/JP2024/009706**

(87) International publication number:
**WO 2024/190812 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **14.03.2023   JP 2023039531**

(71) Applicant: **Meiji Co., Ltd.**
**Chuo-ku**
**Tokyo 104-8306 (JP)**

(72) Inventor: **MIYAUCHI, Atsushi**
**Hachioji-shi, Tokyo 192-0919 (JP)**

(74) Representative: **TBK**
**Bavariaring 4-6**
**80336 München (DE)**

(54) **FERMENTED MILK**

(57)   A fermented milk containing protein particles, wherein the average aspect ratio of the protein particles is 1.0 to 1.8.

## FIG. 1

EP 4 681 545 A1

**Description**

Technical Field

The present invention relates to a fermented milk.

Background Art

Fermented milk is classified into hard (solid) yogurt, drink yogurt (liquid fermented milk), and soft yogurt positioned therebetween. A method for producing fermented milk includes a pre-fermentation type production method in which a raw material mix to which a lactic acid bacterium starter has been added is fermented and then filled in a container, and a post-fermentation type production method in which a raw material mix to which a lactic acid bacterium starter has been added is filled in a container and then fermented.

Among these, the liquid fermented milk is generally produced by the pre-fermentation type production method in which a raw material mix to which a lactic acid bacterium starter has been added is fermented and then filled in a container. In the pre-fermentation type production method, a fermented milk base to which a lactic acid bacterium starter has been added is fermented to yield curds that are the gelatinized fermented milk, and the resultant curds are crushed in a tank to adjust the viscosity of the liquid fermented milk.

In recent years, it has also been studied to increase the protein concentration in fermented milk. A fermented milk containing protein at a high concentration can provide a rich texture and flavor.

Patent Document 1 describes an invention related to a fermented milk characterized in that protein is 4% by weight or more, a ratio of casein protein to casein protein and whey protein is 83% by weight or more, and a pH after storage at 10°C for 7 days is 4.65 or more.

Prior Art References

Patent documents

Patent Document 1: JP 2021-141853 A

Summary of the Invention

Problem to be solved by the invention

In a fermented milk produced by a conventional pre-fermentation or post-fermentation method, a network structure of proteins is formed during fermentation. When such a network structure of proteins is formed in the fermented milk, the viscosity tends to increase over time. In addition, although the viscosity is adjusted by breaking curds after fermentation, whereby the viscosity can be temporarily reduced immediately after the breakage of curds, the viscosity tends to increase due to reaggregation or recombination of proteins during storage. Also in the fermented milk disclosed in Patent Document 1, there is room for further improvement in storage stability.

Accordingly, an object of the present invention is to provide a fermented milk excellent in storage stability.

Means for solving the problem

The present invention provides:

<1> A fermented milk containing protein particles,
wherein the average aspect ratio of the protein particles is 1.0 to 1.8.
<2> The fermented milk according to <1>, wherein the protein particles have an average circularity of 0.6 or more.
<3> The fermented milk according to <2>, wherein the coefficient of variation of the circularity of the protein particles is 40% or less.
<4> The fermented milk according to any one of <1> to <3>, wherein the protein particles have a coefficient of variation of the aspect ratio of 40% or less.
<5> The fermented milk according to any one of <1> to <4>, wherein the 50% particle diameter on the number basis of the protein particles is 1.0 $\mu$m or less.
<6> The fermented milk according to any one of <1> to <5>, wherein the ratio of the 90% particle diameter of the protein particles on the number basis to the 50% particle diameter on the number basis of the protein particles is 1.0 to 5.0.

<7> The fermented milk according to any one of <1> to <6>, wherein the absolute value of the difference between the 50% particle diameter on the number basis of the protein particles and the mode diameter on the number basis of the protein particles is 1.0 μm or less.

<8> The fermented milk according to any one of <1> to <7>, wherein the absolute value of the difference between the 90% particle diameter on the number basis of the protein particles and the mode diameter on the number basis of the protein particles is 5.0 μm or less.

<9> The fermented milk according to any one of <1> to <8>, wherein the content of protein is 10% by mass or more.

<10> The fermented milk according to any one of <1> to <9>, having a viscosity at 10°C of 5,000 mPa·s or less.

<11> The fermented milk according to any one of <1> to <10>, being a liquid fermented milk.

Effects of the Invention

According to the present invention, a fermented milk excellent in storage stability can be provided.

Brief Description of the Drawings

Fig. 1 is a scanning electron microscope image (magnification: 10,000 times) of protein particles in a fermented milk of Example 1.

Fig. 2 is a scanning electron microscope image (magnification: 10,000 times) of protein particles in a fermented milk of Comparative Example 1.

Modes for Carrying out the Invention

Hereinafter, a detailed description is made of the contents of the present invention. In the present specification, "to" in numerical ranges is used to mean including numerical values described before and after the "to" as a lower limit value and an upper limit value.

The fermented milk of the present invention is:

a fermented milk including protein particles, characterized in that
the average aspect ratio of the protein particles is 1.0 to 1.8.

In the present specification, the fermented milk refers to a fermented product obtained by culturing a fermented milk starter such as lactic acid bacteria in a raw material mix containing raw material milk, and may be any of a fermented milk, a dairy product lactic acid bacteria beverage, a lactic acid bacteria beverage, and the like defined by Ministerial Ordinance concerning Milk and the like. Examples of the fermented milk include yogurt.

The fermented milk of the present invention has a small change in viscosity even after long-term storage, and thus is excellent in storage stability. The reason why such an effect can be achieved is presumed to be that the average aspect ratio of protein particles contained in the fermented milk is 1.0 to 1.8, whereby the protein particles can maintain a stable particle structure without binding to each other even during storage, and furthermore, even when the protein particles are aggregated or precipitated during storage, the protein particles can be easily redispersed by simple stirring or the like.

The average aspect ratio of protein particles contained in the fermented milk of the present invention is preferably 1.0 to 1.7, more preferably 1.0 to 1.6, still more preferably 1.0 to 1.5, even more preferably 1.0 to 1.4, particularly preferably 1.0 to 1.3. When the average aspect ratio of protein particles is within the above range, the storage stability of fermented milk can be further improved. Furthermore, it is also possible to improve the texture such as the touch on the tongue.

In the present specification, the aspect ratio of a protein particle is a ratio of the long diameter to the short diameter of the protein particle (= long diameter of protein particle/short diameter of protein particle). In addition, among diameters passing through the center of the protein particle, the longest diameter is referred to as the long diameter, and the shortest diameter is referred to as the short diameter. For example, in the case of ellipse, the major axis is the long diameter and the minor axis is the short diameter. The aspect ratio of a protein particle can be determined by performing image analysis on an image photographed using a scanning electron microscope (SEM) or the like. The image analysis can be performed using known image analysis software. Examples of the image analysis software include ImageJ/Fiji. In addition, in the present specification, the average aspect ratio of protein particles is an arithmetic average value of the aspect ratio of arbitrarily selected 30 protein particles observed in an image.

The coefficient of variation of the aspect ratio of protein particles is preferably 40% or less, more preferably 35% or less, still more preferably 30% or less, particularly preferably 25% or less. When the coefficient of variation of the aspect ratio of protein particles is within the above range, the storage stability of fermented milk can be further improved. Furthermore, it is also possible to improve the texture such as the touch on the tongue.

The coefficient of variation of the aspect ratio of protein particles is defined by the following formula.

Coefficient of variation of aspect ratio of protein particles = (standard deviation of aspect ratio of protein particles/arithmetic average value of aspect ratio of protein particles) $\times$ 100

The average circularity of protein particles is preferably 0.6 or more, more preferably 0.65 or more, still more preferably 0.7 or more, particularly preferably 0.75 or more. The upper limit of the average circularity is preferably 1.2 or less, more preferably 1.15 or less, still more preferably 1.1 or less. When the average circularity of protein particles is within the above range, the storage stability of fermented milk can be further improved. Furthermore, it is also possible to improve the texture such as the touch on the tongue.

In the present specification, the circularity of a protein particle is a value defined by the following formula.

Circularity = $4\pi \times$ area of protein particle/(circumferential length of protein particle)$^2$

The closer the circularity of a protein particle is to 1, the closer the protein particle is to a perfect circle. The area and circumferential length of a protein particle can be determined by performing image analysis on an image photographed using a scanning electron microscope (SEM) or the like. The image analysis can be performed using known image analysis software. Examples of the image analysis software include ImageJ/Fiji. In addition, in the present specification, the average circularity of protein particles is an arithmetic average value of the circularity of arbitrarily selected 30 protein particles observed in an image.

The coefficient of variation of the circularity of protein particles is preferably 40% or less, more preferably 35% or less, still more preferably 30% or less, still more preferably 25% or less, even more preferably 20% or less, particularly preferably 15% or less. When the coefficient of variation of the circularity of protein particles is within the above range, the storage stability of fermented milk can be further improved. Furthermore, it is also possible to improve the texture such as the touch on the tongue.

The content of protein in the fermented milk of the present invention is preferably 2.8% by mass or more, more preferably 5.6% by mass or more, still more preferably 8.0% by mass or more, even more preferably 10.0% by mass or more, particularly preferably 11.0% by mass or more, most preferably 12.0% by mass or more. The upper limit is preferably 35.0% by mass or less, more preferably 30.0% by mass or less.

The solid content concentration in the fermented milk of the present invention is preferably 8.0% by mass or more, more preferably 10.0% by mass or more, still more preferably 12.5% by mass or more, even more preferably 15.0% by mass or more. The upper limit is preferably 65.0% by mass or less, more preferably 55.0% by mass or less.

The viscosity of the fermented milk of the present invention at 10°C is preferably 5000 mPa·s or less, more preferably 2000 mPa·s or less, still more preferably 1000 mPa·s or less, particularly preferably 500 mPa·s or less. The viscosity of the fermented milk is a value measured by a method described in Examples described later.

The hardness of the fermented milk of the present invention at 10°C is preferably 0.1 N or less, more preferably 0.05 N or less, still more preferably 0.025 N or less. The hardness of the fermented milk can be measured by a compression test method.

The Bostwick viscosity of the fermented milk of the present invention at 10°C is preferably 10 cm/10 seconds or more, more preferably 12.5 cm/10 seconds or more, still more preferably 15.0 cm/10 seconds or more. The Bostwick viscosity of the fermented milk can be measured using a Bostwick viscometer.

The 50% particle diameter on the number basis of the fermented milk of the present invention is preferably 1.0 μm or less, and because a fermented milk having a smoother texture such as touch on the tongue can be obtained, the 50% particle diameter is more preferably 0.5 μm or less, still more preferably 0.1 μm or less.

The 90% particle diameter on the number basis of the fermented milk of the present invention is preferably 2.0 μm or less, more preferably 1.0 μm or less, still more preferably 0.5 μm or less, and particularly preferably 0.2 μm or less, because a fermented milk having a smoother texture such as touch on the tongue can be obtained.

The mode diameter on the number basis of the fermented milk of the present invention is preferably 1.0 μm or less, more preferably 0.5 μm or less, still more preferably 0.1 μm or less, because a fermented milk having a smoother texture such as touch on the tongue can be obtained by making the particle diameters smaller and uniform.

The ratio of the 90% particle diameter on the number basis to the 50% particle diameter on the number basis (= 90% particle diameter on number basis/50% particle diameter on number basis) in the fermented milk of the present invention is preferably 1.0 to 5.0, more preferably 1.0 to 3.0, still more preferably 1.0 to 2.0, because a fermented milk having a smoother texture such as touch on the tongue can be obtained when the particle diameters are made smaller and uniform.

The absolute value of the difference between the 50% particle diameter on the number basis and the mode diameter on the number basis in the fermented milk of the present invention is preferably 1.0 μm or less, more preferably 0.5 μm or less, still more preferably 0.1 μm or less, because a fermented milk having a smoother texture such as touch on the tongue can be obtained.

The absolute value of the difference between the 90% particle diameter on the number basis and the mode diameter on the number basis in the fermented milk of the present invention is preferably 5.0 μm or less, more preferably 0.5 μm or less, still more preferably 0.2 μm or less, because a fermented milk having a smoother texture such as touch on the tongue can be obtained.

In the fermented milk of the present invention, the ratio of the value of the difference between the 90% particle diameter on the number basis and the 10% particle diameter on the number basis to the 50% particle diameter on the number basis (= (90% particle diameter on number basis - 10% particle diameter on number basis)/50% particle diameter on number basis) is preferably 0.8 to 2.0, because a fermented milk having a smoother texture such as touch on the tongue can be obtained. The upper limit is preferably 1.5 or less, more preferably 1.4 or less. The lower limit is preferably 0.9 or more, more preferably 0.93 or more.

The 10% particle diameter on the number basis refers to a particle diameter corresponding to 10% of an integrated distribution curve obtained from a particle size distribution on the number basis of a measurement sample, the 50% particle diameter on the number basis refers to a particle diameter corresponding to 50% of an integrated distribution curve obtained from a particle size distribution on the number basis of a measurement sample, the 90% particle diameter on the number basis refers to a particle diameter corresponding to 90% of an integrated distribution curve obtained from a particle size distribution on the number basis of a measurement sample, and the mode diameter on the number basis refers to a particle diameter having the highest frequency in a peak in a particle size distribution on the number basis of a measurement sample. The particle size distribution on the number basis of a measurement sample is determined by a laser diffraction scattering method. As the particle size distribution measuring device, a particle size distribution measuring device using a laser diffraction scattering method is used. Examples of the device include LS 13 320 manufactured by Beckman Coulter.

The fermented milk of the present invention may contain a sweetener (water, saccharides such as sugar, sweeteners, and the like), a mineral, a pulp, a fruit juice, a sauce, an acidulant, a flavor, and the like.

The fermented milk of the present invention is preferably a liquid fermented milk. The viscosity of the liquid fermented milk at 10°C is preferably 5000 mPa·s or less, more preferably 2000 mPa·s or less, still more preferably 1000 mPa·s or less, particularly preferably 500 mPa·s or less. One example of the liquid fermented milk includes drink yogurt. One embodiment of the fermented milk of the present invention includes a drink yogurt which is filled in an individual container for distribution such as a pack, a bottle, or a jar, and is in the form of a final product. The liquid fermented milk is a fermented milk having fluidity to such an extent that a user can eat and drink by inclining a container without using a spoon or the like. Furthermore, the drink yogurt is a beverage type yogurt, and is a yogurt having fluidity to the extent that a user can eat and drink by inclining a container without using a spoon or the like.

The fermented milk of the present invention can also be used as a raw material for beverages, confectionery, ice cream, bakery products, nutritional foods, other processed foods and supplements obtained using milk or yogurt as a raw material, and the like.

The fermented milk of the present invention can be produced through a fermentation step of adding a fermented milk starter to a raw material mix containing raw material milk to ferment a mixture of the raw material mix and the fermented milk starter, and a cooling step of cooling the fermented product obtained in the fermentation step. In the fermentation step, it is preferable to perform fermentation while allowing the mixture or the fermented product of the mixture to flow, and it is more preferable to perform fermentation while allowing the mixture or the fermented product of the mixture to flow such that the 90% particle diameter on the volume basis of the mixture or the fermented product of the mixture does not exceed 125 μm. In the cooling step, it is preferable to cool the fermented product obtained in the fermentation step while allowing the fermented product to flow.

That is, it is preferable that the method for producing fermented milk of the present invention include: a fermentation step of adding a fermented milk starter to a raw material mix containing raw material milk to ferment a mixture of the raw material mix and the fermented milk starter; and a cooling step of cooling a fermented product obtained in the fermentation step, in which in the fermentation step, fermentation is performed while the raw material mix is allowed to flow (preferably, while the mixture or the fermented product of the mixture is allowed to flow such that the 90% particle diameter on the volume basis of the mixture or the fermented product of the mixture does not exceed 125 μm), and in the cooling step, the fermented product is cooled while the fermented product is allowed to flow. By producing the fermented milk in this way, the fermented milk of the present invention in which the average aspect ratio of protein particles is 1.0 to 1.8 can be produced. This is presumed to be because, in the fermentation step and the cooling step, fermentation or cooling is performed while the fermented product or the like is allowed to flow, whereby the formation of a mesh network of proteins during fermentation or cooling is suppressed, and the proteins are easily aggregated in a spherical shape.

In addition, in the case of fermenting a raw material mix having a high protein concentration, firm curds are formed during fermentation, so that the viscosity tends to increase or coarse aggregates tend to be generated. However, when the mixture of the raw material mix and the fermented milk starter is fermented in the fermentation step, it is presumed that performing the fermentation while allowing the mixture or the fermented product of the mixture to flow (preferably, while the mixture or the fermented product of the mixture is allowed to flow such that the 90% particle diameter on the volume basis of the mixture or the fermented product of the mixture does not exceed 125 $\mu$m) can make the fermentation progress while suppressing formation of curds and generation of coarse aggregates. In addition, it is presumed that formation of curds and generation of coarse aggregates during cooling can be suppressed by cooling the fermented product obtained in the fermentation step while allowing the fermented product to flow. Therefore, it is particularly effective in the case of producing a fermented milk having a high protein content (for example, the protein content is 8.0% by mass or more, preferably 10.0% by mass or more, more preferably 11.0% by mass or more, still more preferably 12.0% by mass or more) and a low viscosity (preferably a liquid fermented milk).

A description is made of the raw material mix used for the fermented milk. The raw material mix is a raw material preparation in which raw materials for the fermented milk are mixed, which is prepared by adding (blending) to raw material milk a sweetening agent (water, saccharides such as sugar, sweeteners, and the like), a stabilizer, a mineral, a fat and oil, an emulsifier, a flavor, an enzyme (lactase or the like) and the like as necessary, and dissolving the mixture while heating the mixture as necessary. Examples of the raw material milk include raw milk, sterilized milk, skimmed milk, whole fat powder milk, skimmed milk powder, whole fat concentrated milk, skimmed concentrated milk, buttermilk, butter, cream, cheese, milk protein concentrate (MPC), whey protein concentrate (WPC), whey protein isolate (WPI), $\alpha$-lactalbumin ($\alpha$-La), and $\beta$-lactoglobulin ($\beta$-Lg). These raw materials can be used alone or in combination of two or more kinds thereof.

The raw material mix may be composed of only raw milk (100% raw milk).

The raw material mix may be subjected to homogenization treatment, heat sterilization treatment, or the like.

When a raw material mix containing a raw material containing fat such as raw milk, cream, butter, or cheese is used, it is preferable to perform a homogenization treatment. Performing the homogenization treatment can reduce the particle diameter of solid components such as fat spheres contained in the raw material mix, thereby uniformly dispersing the solid components in the raw material mix. As the homogenization treatment, for example, known means and conditions such as passing the raw material mix through a narrow gap under pressure can be employed. The homogenization treatment is not limited to a treatment performed using a known homogenizer (homogenizer), but may be a shearing treatment performed using stirring, a homomixer, an extruder, or the like.

The heat sterilization treatment of the raw material mix can be performed using a known method or apparatus. The heat sterilization treatment may be an indirect heating method or a direct heating method. The heat sterilization treatment can be performed using, for example, a plate heat exchanger, a tube heat exchanger, a steam injection heating apparatus, a steam infusion heating apparatus, an electrically heating apparatus, or a batch sterilization apparatus (emulsifying pot, kneader, cooker, etc.). As the heat sterilization treatment conditions, known conditions can be appropriately selected. For example, the heating temperature can be 70 to 150°C. The heating time can be appropriately adjusted depending on the heating temperature. For example, the heating time can be 1 to 300 seconds.

Specific examples of the heat sterilization treatment include an ultra-high temperature instantaneous sterilization (UHT sterilization) method in which heat treatment is performed at 120 to 150°C for 2 to 3 seconds, a high temperature short time sterilization (HTST sterilization) method in which heat treatment is continuously performed at 72 to 75°C for 15 seconds or more, a high temperature holding sterilization (HTLT sterilization) method in which heat treatment is performed at 75°C or more for 15 minutes or more in a held manner, a high temperature short time sterilization (HTST sterilization) method in which heat treatment is continuously performed at 72°C or more for 15 seconds or more, and an ultra-high temperature sterilization (LL sterilization) method in which heat treatment is performed at 135 to 150°C for 1 to 4 seconds. Two or more of these methods may be performed in combination. The heat sterilization treatment is preferably an HTST sterilization method or a UHT sterilization method.

The content of protein in the raw material mix is preferably 2.8% by mass or more, more preferably 5.6% by mass or more, still more preferably 8.0% by mass or more, even more preferably 10.0% by mass or more, particularly preferably 11.0% by mass or more, most preferably 12.0% by mass or more. The upper limit is preferably 35.0% by mass or less, more preferably 30.0% by mass or less.

The solid content concentration in the raw material mix is preferably 8.0% by mass or more, more preferably 10.0% by mass or more, still more preferably 12.5% by mass or more, even more preferably 15.0% by mass or more. The upper limit is preferably 65.0% by mass or less, more preferably 55.0% by mass or less.

In the production of fermented milk, a fermented milk starter is added to a raw material mix to ferment the raw material mix. The fermented milk starter means inoculum such as lactic acid bacteria and yeasts inoculated to ferment the raw material mix. As the fermented milk starter, a known fermented milk starter, preferably lactic acid bacterium can be appropriately used. The lactic acid bacterium is a generic term for microorganisms that assimilate glucose and produce lactic acid with a sugar-based yield of 50% or more, and is a gram-positive coccus or bacillus having characteristics such as no mobility, no sporulation ability, and catalase negative as physiological properties. Examples of the lactic acid bacteria include lactic acid bacteria classified into the genus Lactococcus, Lactobacillus, Leuconostoc, Pediococcus, Streptococcus, Wissella, Tetragenococcus, Oenococcus, Enterococcus, Vagococcus, Carnobacterium, and Bifidobacterium. In the embodiment of the present invention, all these lactic acid bacteria can be used for the fermented milk starter.

The fermented milk starter preferably includes at least one lactic acid bacterium selected from the group consisting of Lactobacillus bulgaricus, Streptococcus thermophilus, Lactobacillus casei, Lactobacillus gasseri, Lactococcus lactis, Lactobacillus plantarum, Lactobacillus acidophilus, and Bifidobacterium, more preferably includes at least one lactic acid bacterium selected from Lactobacillus bulgaricus, Streptococcus thermophilus, and Lactobacillus casei. As one aspect, the fermented milk starter preferably includes at least one selected from Lactobacillus bulgaricus and Streptococcus thermophilus, more preferably includes Lactobacillus bulgaricus and Streptococcus thermophilus. As another aspect, it is preferred that the fermented milk starter include Lactobacillus casei.

Specific examples of Lactobacillus bulgaricus include the 2038 strain of Lactobacillus bulgaricus, 1589 strain of Lactobacillus bulgaricus (NITE BP-03716), and OLL 1073R-1 (FERM P-17227) of Lactobacillus bulgaricus.

For Lactobacillus bulgaricus, a bacterial strain such as Lactobacillus delbrueckii ssp. bulgaricus OLL1171 (hereinafter sometimes referred to as "OLL 1171 strain") specified by Accession No. NITE BP-01569, Lactobacillus delbrueckii ssp. bulgaricus OLL1073R-1 (hereinafter sometimes referred to as "OLL 1073R-1 strain") specified by Accession No. FERM BP-10741, Lactobacillus delbrueckii ssp. bulgaricus OLL205013 (hereinafter sometimes referred to as "OLL 205013 strain") specified by Accession No. NITE BP-02411, Lactobacillus delbrueckii ssp. bulgaricus OLL1247 (hereinafter sometimes referred to as "OLL 1247 strain") specified by Accession No. NITE BP-01814, Lactobacillus delbrueckii ssp. bulgaricus OLL1251 (hereinafter sometimes referred to as "OLL 1251 strain") specified by Accession No. NITE BP-02703, or Lactobacillus delbrueckii ssp. bulgaricus 1589 (hereinafter, sometimes referred to as "1589 strain") specified by Accession No. NITE BP-03716 can also be used.

The OLL1171 strain identified as (1) Lactobacillus delbrueckii ssp. bulgaricus OLL1171 under (2) Accession No.: NITE BP-01569 at (3) Accession Date: March 13, 2013, the OLL1073R-1 strain identified as (1) Lactobacillus delbrueckii ssp. bulgaricus OLL1073R-1 under (2) Accession No.: FERM BP-10741 at (3) Accession Date: February 22, 1999, the OLL205013 strain identified as (1) Lactobacillus delbrueckii ssp. bulgaricus OLL205013 under (2) Accession No.: NITE BP-02411 at (3) Accession Date: February 3, 2017, the OLL1247 strain identified as (1) Lactobacillus delbrueckii ssp. bulgaricus OLL1247 under (2) Accession No.: NITE BP-01814 at (3) Accession Date: March 6, 2014, the OLL1251 strain identified as (1) Lactobacillus delbrueckii ssp. bulgaricus OLL1251 under (2) Accession No.: NITE BP-02703 at (3) Accession Date: April 25, 2018, and the 1589 strain identified as (1) Lactobacillus delbrueckii ssp. bulgaricus 1589 under (2) Accession No.: NITE BP-03716 at (3) Accession Date: August 9, 2022 are individually deposited at (4) a depositary institution: Patent Microorganisms Depositary, National Institute of Technology and Evaluation (122, 2-5-8 Kazusakamatari, Kisarazu-shi, Chiba 292-0818). The Lactobacillus bulgaricus identified under these accession numbers may be a passaged strain from the same strain, or an artificial mutant strain, a natural mutant strain, a genetically modified strain, a derivative strain, or the like of the same strain or the passaged strain.

As the Lactobacillus bulgaricus, for example, Lactobacillus bulgaricus isolated from a commercially available fermented milk on a known agar medium for the genus Lactobacillus (for example, MRS agar medium, BCP-added plate count agar medium) can also be used. As such Lactobacillus bulgaricus, for example, the 2038 strain of Lactobacillus bulgaricus isolated from "Meiji Bulgaria Yogurt (registered trademark), manufactured by Meiji Co., Ltd." as fusiform colonies on a BCP-added plate count agar medium are stored at Meiji Innovation Center belonging to Meiji Co., Ltd. (1-29-1 Nanakuni, Hachioji, Tokyo, Japan 192-0919).

As the Lactobacillus bulgaricus, a highly polysaccharide-producing lactic acid bacterium can also be used. In the present specification, the "highly polysaccharide-producing lactic acid bacterium" refers to a lactic acid bacterium capable of producing a large amount of exopolysaccharide (EPS).

Whether or not Lactobacillus bulgaricus is a highly polysaccharide-producing lactic acid bacterium can be confirmed, for example, by the method described below. That is, for example, by measuring the amount of exopolysaccharide (EPS) in a culture solution in which Lactobacillus bulgaricus after activation as necessary is cultured (for example, statically cultured at 37°C for 18 hours in a 10 w/v% skimmed milk powder medium to which a culture solution after 2 x activation culture in 10w/v% skimmed milk powder medium such that the amount of a frozen bacterial strain is adjusted to 1 platinum loop/5 mL is inoculated so as to be 1 w/w%), it can be determined that Lactobacillus bulgaricus is a highly polysaccharide-producing lactic acid bacterium when the amount is large. The amount of exopolysaccharide (EPS) can be appropriately measured by a conventionally known method, and examples of the method include a method in which components in 4 mL of a culture solution are dissolved with trichloroacetic acid, then the polysaccharide is precipitated with ethanol and recovered, followed by dialysis against ultrapure water if necessary, to measure the obtained amount of polysaccharide by a phenol-sulfuric acid method. For example, when the amount of polysaccharide (mg/kg) in the culture medium measured by the above method is 70 mg/kg or more, 105 mg/kg or more, 116 mg/kg or more, or 120 mg/kg or more, it can be determined that Lactobacillus bulgaricus is a highly polysaccharide-producing lactic acid bacterium. For example, when the amount of polysaccharide (mg/kg) measured by the above method exceeds the amount of exopolysaccharide (EPS) in a culture solution in which the 2038 strain of Lactobacillus bulgaricus is cultured, more specifically, exceeds 1.0 time or is 1.1 times or more the amount of exopolysaccharide (EPS) in a culture solution in which the 2038 strain of Lactobacillus bulgaricus is cultured, it may be determined that Lactobacillus bulgaricus is particularly a highly polysaccharide-producing lactic acid bacterium.

Specific examples of Lactobacillus bulgaricus which is such a highly polysaccharide-producing lactic acid bacterium include the OLL1251 strain, OLL1073R-1 strain, and OLL1247 strain.

Specific examples of Streptococcus thermophilus include the 1131 strain of Streptococcus thermophilus and 3078 strain of Streptococcus thermophilus (NITE BP-01697).

For the Streptococcus thermophilus, a highly polysaccharide-producing lactic acid bacterium can also be used. Whether or not Streptococcus thermophilus is a highly polysaccharide-producing lactic acid bacterium can be confirmed, for example, by the method described below. That is, for example, by measuring the amount of exopolysaccharide (EPS) in a culture solution in which Streptococcus thermophilus after activation as necessary is cultured (for example, statically cultured at 43°C for 4 hours in a 10 w/v% skimmed milk powder-0.1 w/v% casein-degrading peptide medium to which a culture solution after 2 x activation culture in 10w/v% skimmed milk powder-0.1 w/v% casein-degrading peptide medium such that the amount of a frozen bacterial strain is adjusted to 1 platinum loop/5 mL is inoculated so as to be 1 w/w%), it can be determined that Streptococcus thermophilus is a highly polysaccharide-producing lactic acid bacterium when the amount is large. The amount of exopolysaccharide (EPS) can be appropriately measured by a conventionally known method, and examples of the method include a method in which components in 10 g of a culture solution are dissolved with trichloroacetic acid, then the polysaccharide is precipitated with ethanol and recovered, followed by dialysis against ultrapure water if necessary, to measure the obtained amount of polysaccharide by a phenol-sulfuric acid method. For example, when the amount of polysaccharide (mg/kg) in the culture medium measured by the above method is 3 mg/kg or more, 12 mg/kg or more, 13 mg/kg or more, or 14 mg/kg or more, it can be determined that Lactobacillus bulgaricus is a highly polysaccharide-producing lactic acid bacterium. For example, when the amount of polysaccharide (mg/kg) measured by the above method exceeds the amount of exopolysaccharide (EPS) in a culture solution in which the strain 1131 of Streptococcus thermophilus is cultured, more specifically, exceeds 1.0 time or is 1.1 times or more the amount of exopolysaccharide (EPS) in a culture solution in which the strain 1131 of Streptococcus thermophilus is cultured, it may be determined that Streptococcus thermophilus is particularly a highly polysaccharide-producing lactic acid bacterium.

Specific examples of Streptococcus thermophilus, which is such a highly polysaccharide-producing lactic acid bacterium, include the OLS3290 strain and OLS3078 strain.

Specific examples of Lactobacillus casei include the Lactobacillus casei P2203401.

For the fermented milk starter, lactic acid bacteria separated from a fermented dairy product (for example, Meiji Bulgaria Yogurt, Meiji Probio Yogurt LG 21, Meiji Probio Yogurt R-1, a snack type of Meiji Bulgaria Yogurt manufactured by Meiji Co., Ltd., and the like) can also be used as a combination of Lactobacillus bulgaricus and Streptococcus thermophilus.

The additive amount of the fermented milk starter can be appropriately adjusted depending on the additive amount adopted in a known method for producing fermented milk. Also, the method for inoculating the fermented milk starter is not particularly limited, and a method commonly used in a known production of fermented milk can be appropriately used.

In the fermentation step, a fermented milk starter is added to a raw material mix containing raw material milk to ferment a mixture of the raw material mix and the fermented milk starter. After adding the fermented milk starter to the raw material mix, stirring is preferably performed in order to disperse the fermented milk starter in the raw material mix. In the fermentation step, it is preferable to perform fermentation while allowing the mixture or the fermented product of the mixture to flow, and it is more preferable to perform fermentation while allowing the mixture or the fermented product of the mixture to flow such that the 90% particle diameter on the volume basis of the mixture or the fermented product of the mixture does not exceed 125 μm. In the fermentation step, it is preferable to perform fermentation while allowing the mixture or the fermented product of the mixture to flow from the start of fermentation to the end of fermentation. The start of fermentation refers to the time point when the fermented milk starter is added to the raw material mix. Mixing the raw material mix with the fermented milk starter may cause fermentation of the raw material mix to proceed by the fermented milk starter. Therefore, the "fermented product" in the fermentation step is a product obtained by culturing and fermenting the fermented milk starter in the raw material mix, which product is in the middle of fermentation.

In the present specification, "performing fermentation while allowing a mixture or a fermented product of the mixture to flow" means performing fermentation and allowing a mixture or a fermented product of the mixture to flow in parallel. In the fermentation step, the flow method of a mixture or a fermented product of the mixture is not particularly limited as long as shearing force is applied in the fermentation step. Stirring is preferred. In the fermentation step, it is preferable to perform fermentation while stirring the mixture or the fermented product of the mixture, and it is more preferable to perform fermentation while stirring the mixture or the fermented product of the mixture so as to be uniform.

In the present specification, stirring means an operation of stirring an object by a machine or the like. Specifically, stirring means an operation of stirring an object while applying a shearing force to the object using a stirrer, a mixer, or the like. The mixture or the fermented product of the mixture can be stirred using a stirrer, a mixer, a food cutter, a kneader, a turbo mixer, a kneading machine, a combination thereof, or the like. The shape of the stirring blade of the stirrer is not particularly limited. The stirring blade includes paddle blades (flat paddle blades, inclined paddle blades, disk turbine blades, and the like), propeller blades, turbine blades, anchor blades, helical ribbon blades, and screw blades. In addition, a stirring blade having a shape other than the shape of the above-mentioned stirring blades may be used. A plurality of these stirring blades may be used in combination.

When fermentation is performed while the mixture or the fermented product of the mixture is stirred so as to be uniform, it is preferable to perform fermentation while stirring the mixture or the fermented product of the mixture in the fermentation tank so as not to retain the mixture or the fermented product of the mixture or so as not to stagnate. One aspect includes stirring during fermentation such that the viscosity of the mixture or the fermented product of the mixture in the fermentation tank is substantially uniform. For example, when the liquid depth of the mixture or the fermented product of the mixture in the fermentation tank is less than 60 cm, it can be said that the mixture or the fermented product of the mixture in the fermentation tank is uniform as long as the viscosity of each of a site in the vicinity of the center of the fermentation tank at a depth of about 1/4 from the liquid surface in the fermentation tank and a site in the vicinity of the inner wall of the fermentation tank at a depth of about 1/4 from the liquid surface in the fermentation tank is in the range of the average value × 80 to 120% of the viscosities of these sites. In addition, for example, when the liquid depth of the mixture or the fermented product of the mixture in the fermentation tank exceeds 60 cm, it can be said that the mixture or the fermented product of the mixture in the fermentation tank is uniform as long as the viscosity of each of a site in the vicinity of the center of the fermentation tank at a depth of about 15 cm from the liquid surface in the fermentation tank and a site in the vicinity of the inner wall of the fermentation tank at a depth of about 15 cm from the liquid surface in the fermentation tank is in the range of the average value × 80 to 120% of the viscosities of these sites.

One preferred aspect includes an aspect in which, during the fermentation step, fermentation is performed while the mixture or the fermented product of the mixture is allowed to flow such that the viscosity of each of a site in the vicinity of the center of the fermentation tank at a depth of about 1/4 from the liquid surface in the fermentation tank and a site in the vicinity of the inner wall of the fermentation tank at a depth of about 1/4 from the liquid surface in the fermentation tank is in the range of the average value × 80 to 120% of the viscosities of these sites. In this aspect, the liquid depth of the mixture or the fermented product of the mixture in the fermentation tank is preferably less than 60 cm.

Another preferred aspect includes an aspect in which, during the fermentation step, fermentation is performed while the mixture or the fermented product of the mixture is allowed to flow such that the viscosity of each of a site in the vicinity of the center of the fermentation tank at a depth of about 15 cm from the liquid surface in the fermentation tank and a site in the vicinity of the inner wall of the fermentation tank at a depth of about 15 cm from the liquid surface in the fermentation tank is in the range of the average value × 80 to 120% of the viscosities of these sites. In this aspect, the liquid depth of the mixture or the fermented product of the mixture in the fermentation tank is preferably more than 60 cm.

Another preferred aspect includes an aspect in which, during the fermentation step, fermentation is performed while the mixture or the fermented product of the mixture is allowed to flow such that the viscosity of each of a site in the vicinity of the center of the fermentation tank at a depth of 1/4 from the liquid surface in the fermentation tank, a site in the vicinity of the inner wall of the fermentation tank at a depth of 1/4 from the liquid surface in the fermentation tank, a site in the vicinity of the center of the fermentation tank at a depth of 2/4 from the liquid surface in the fermentation tank, a site in the vicinity of the inner wall of the fermentation tank at a depth of 2/4 from the liquid surface in the fermentation tank, a site in the vicinity of the center of the fermentation tank at a depth of about 3/4 from the liquid surface in the fermentation tank, and a site in the vicinity of the inner wall of the fermentation tank at a depth of about 3/4 from the liquid surface in the fermentation tank is in the range of average value × 80 to 120% of the viscosities of these sites.

In the fermentation step, it is also preferable to perform fermentation while stirring the mixture or the fermented product of the mixture so as to generate upper and lower circulation flows. According to this aspect, the mixture or the fermented product of the mixture can be stirred in the fermentation tank without stagnation, and the mixture or the fermented product of the mixture in the fermentation tank can be stirred so as to be uniform. In particular, when a raw material mix having a high protein concentration is used, the viscosity tends to increase during fermentation, but by stirring in this way, an increase in viscosity during fermentation can be effectively suppressed.

In addition, in the fermentation step, it is also preferable to stir the mixture or the fermented product of the mixture such that the flow rate of the mixture or the fermented product of the mixture in the fermentation tank becomes substantially uniform. According to these aspects, the mixture or the fermented product of the mixture can be stirred in the fermentation tank without stagnation, and the mixture or the fermented product of the mixture in the fermentation tank can be stirred so as to be uniform. In particular, when a raw material mix having a high protein concentration is used, the viscosity tends to increase during fermentation, but by stirring in this way, an increase in viscosity during fermentation can be effectively suppressed.

The 90% particle diameter on the volume basis of the mixture or the fermented product of the mixture during the fermentation step is preferably 120 μm or less, more preferably 100 μm or less, still more preferably 80 μm or less, particularly preferably 60 μm or less. The 90% particle diameter on the volume basis is a particle diameter corresponding to 90% of an integrated distribution curve obtained from a particle size distribution on the volume basis of a measurement sample. In the present specification, the particle size distribution on the volume basis of a measurement sample is determined by a laser diffraction scattering method. As the particle size distribution measuring device, a particle size distribution measuring device using a laser diffraction scattering method is used. Examples of the device include LS 13 320 manufactured by Beckman Coulter.

In the fermentation step, it is preferable to perform fermentation while allowing the mixture or the fermented product of the mixture to flow (preferably stirring the same) such that the Reynolds number is 5 to 250,000. The upper limit of the Reynolds number during the fermentation step is preferably 200,000 or less, more preferably 170,000 or less. The lower limit of the Reynolds number is preferably 7.5 or more, more preferably 10 or more.

The Reynolds number is a value calculated from the following.

$$\text{Reynolds number} = \text{inertial force/viscous force}$$

For example, in the case of stirring in the fermenter, the Reynolds number is calculated from the following formula.

$$\text{Reynolds number } Re = d^2 \times n \times \rho/\mu$$

d: blade diameter (m)
n: rotation speed (rps)
$\rho$: density (kg/m$^3$)
$\mu$: viscosity (Pa·s)

In the fermentation step, it is preferable to perform fermentation while changing the shearing force applied to the mixture or the fermented product of the mixture stepwise or continuously between the start of fermentation and the end of fermentation. When a strong shearing force is applied for a long time during fermentation, fermentation may be delayed, so that the fermentation time may be prolonged. However, performing fermentation while changing the shearing force stepwise or continuously can suppress application of a strong shearing force to the mixture or the fermented product of the mixture, thereby suppressing formation of curds during fermentation while suppressing fermentation delay. Therefore, it is possible to more efficiently produce a fermented milk having low viscosity and suppressed generation of coarse aggregates. More specifically, when the viscosity of the fermented product increases during fermentation, it is preferable to increase the shearing force applied to the fermented product stepwise or continuously. According to this aspect, formation of curds during fermentation can be more effectively suppressed. In addition, when the viscosity of the fermented product decreases during fermentation, it is preferable to reduce the shearing force applied to the fermented product stepwise or continuously. According to this aspect, entrainment of bubbles during fermentation can be suppressed, and energy efficiency can be improved.

As a preferred embodiment, in the fermentation step, when the pH of the fermented product falls below a preset pH of 5.7 to 5.2, it is preferable to increase the shearing force applied to the fermented product more than the shearing force applied at the time point when the pH is equal to or higher than the preset pH. According to this aspect, formation of curds during fermentation can be more effectively suppressed.

A method for changing the shearing force applied to the mixture or the fermented product of the mixture stepwise or continuously includes, for example, a method described below in which fermentation is performed while the mixture or the fermented product of the mixture is stirred as an example.

One aspect includes a method including changing the driving force such as the rotation speed or the peripheral speed of a stirring blade or a mixer.

Another embodiment includes a method including changing the type or the combination of stirring means to be driven using a stirrer equipped with a plurality of stirring means such as a multifunctional stirrer equipped with a mixer and a stirring blade. An example of the operation in the case of using a multifunctional stirrer equipped with a mixer and a stirring blade includes a method including performing stirring only with a stirring blade when the viscosity is low, and performing stirring by driving a mixer while stopping a stirring blade or while performing stirring with a stirring blade when the viscosity increases. Also in this case, the driving force such as the rotation speed and the peripheral speed of a stirring blade and a mixer may be changed.

The fermentation temperature in the fermentation step can be appropriately selected depending on the type of fermented milk starter. For example, the fermentation step can be performed within a temperature range of 25 to 50°C. When mesophilic bacteria are used as the fermented milk starter, the fermentation temperature is preferably 25 to 35°C. When thermophilic bacteria are used as the fermented milk starter, the fermentation temperature is preferably 35 to 45°C.

The fermentation step is preferably performed until the pH of the fermented product is 4.8 or less (more preferably 4.7 or less, still more preferably 4.6 or less, even more preferably 4.4 or less) and reaches a desired pH. According to this aspect, a dispersion effect by an electric repulsive force due to the charge of protein can also be expected.

In the fermentation step, it is preferable to continuously allow the mixture or the fermented product of the mixture to flow (preferably stir the same), but stirring may be intermittently stopped for a short time (for example, a time of 10% or less, a time of 5% or less, a time of 1% or less, or the like of the entire time required for the fermentation step). In the fermentation step, it is particularly preferable to allow the mixture or the fermented product of the mixture to flow (preferably, stir the same) for a time exceeding 90% (preferably a time exceeding 95%, more preferably a time exceeding 99%) of the time required for the fermentation step.

In the cooling step, the fermented product obtained in the fermentation step is cooled. In the cooling step, it is preferable to cool the fermented product obtained in the fermentation step while allowing the fermented product to flow.

In the present specification, "cooling the fermented product obtained in the fermentation step while allowing the fermented product to flow" means cooling the fermented product obtained in the fermentation step and allowing the fermented product to flow in parallel. The flow method of the fermented product during the cooling step is not particularly limited as long as shearing force is applied to the fermented product. Stirring is preferred.

In the cooling step, it is preferable to perform fermentation while allowing the fermented product to flow (preferably stirring the same) such that the Reynolds number is 10 to 35,000. The upper limit of the Reynolds number during the cooling step is preferably 33,000 or less, more preferably 32,000 or less. The lower limit of the Reynolds number is preferably 12.5 or more, more preferably 15.0 or more.

In the cooling step, it is possible to perform cooling while changing the shearing force applied to the fermented product stepwise or continuously between the start of cooling and the end of cooling. When performing cooling while changing the shearing force, entrainment of bubbles can be suppressed, and energy efficiency can be improved.

In the cooling step, the temperature of the fermented product is preferably cooled to 15°C or lower. The temperature is preferably 10°C or lower. The lower limit of the temperature is not particularly limited, but may be -5°C or higher, or 0°C or higher. The cooling time varies depending on conditions such as the cooling temperature, the amount of the fermented product, and the cooling method, and may be, for example, 1 to 24 hours.

In the method for producing fermented milk, the ratio of the 90% particle diameter on the volume basis of the fermented product (fermented milk) after the cooling step to the 90% particle diameter on the volume basis of the raw material mix before the fermentation step is preferably 450 or less, more preferably 300 or less, still more preferably 150 or less, even more preferably 100 or less, particularly preferably 75 or less.

The fermented product (fermented milk) after the cooling step may be subjected to stirring or homogenization treatment to adjust the viscosity. Additives such as a sweetening agent, pulp, fruit juice, a sauce, an acidulant, a flavor, a stabilizer, and a viscosity modifier may be added to the fermented product, followed by mixing (stirring).

Examples

Hereinafter, more specific description is made of the present invention with reference to Examples. Materials, amounts used, proportions, processing contents, processing procedures, and the like described in the following Examples can be appropriately changed without departing from the gist of the present invention. Accordingly, the scope of the present invention is not limited to the following specific Examples.

<Method for measuring particle diameter>

The 90% particle diameter on the volume basis of a measurement sample was determined by measuring a particle size distribution on the volume basis of a measurement sample by a laser diffraction scattering method using a particle size distribution measuring apparatus (LS 13 320 manufactured by Beckman Coulter, Inc.).

The 10% particle diameter on the number basis, the 50% particle diameter on the number basis, the 90% particle diameter on the number basis, and the mode diameter on the number basis of a measurement sample were determined by measuring a particle size distribution on the number basis of a measurement sample by a laser diffraction scattering method using a particle size distribution measuring apparatus (LS 13 320 manufactured by Beckman Coulter, Inc.).

<Method for measuring viscosity>

The viscosity of a measurement sample was measured by the following method.

Into a cup for sterilization inspection (BE2200 manufactured by EIKEN CHEMICAL CO., LTD., container size: upper diameter 58 mm, lower diameter 56 mm, height 72 mm, capacity 100 ml), a measurement sample was put in an amount such that the height of the liquid surface in the cup was about 60 mm, and then stirred at the lower part (position at a depth of about 55 mm from the liquid surface), the middle part (position at a depth of about 1/2 from the liquid surface), and the upper part (position at a depth of about 20 mm from the liquid surface) of the measurement sample in the cup for 30 seconds each under conditions of a peripheral speed of 0.8 m/s and a rotation speed of 400rpm by means of a three-one motor (model no.: BL1200, manufactured by Shinto Scientific Co., Ltd., radius of a stirring blade: 20 mm). Subsequently, the stirring blade was rotated in reverse to stir the lower part, the middle part, and the upper part of the measurement sample in the cup each for 30 seconds. In this way, pretreatment was performed. For the measurement sample after the pretreatment, the M2 rotor, the M3 rotor, or the M4 rotor was inserted into the measurement sample for rotation (at 30 rpm for 30 sec) at a measurement temperature of 10°C using a rotary B-type viscometer (TVB25 viscometer, manufactured by Toki Sangyo Co., Ltd.) to measure the viscosity. As the rotor, the M2 rotor was used when the viscosity of a measurement sample was 500 mPa·s or less, the M3 rotor was used when the viscosity of a measurement sample was 500 to 4000 mPa·s, and the M4 rotor was used when the viscosity of a measurement sample was 4000 mPa·s or more.

<Method for measuring aspect ratio, average aspect ratio, coefficient of variation of aspect ratio, circularity, average circularity, and coefficient of variation of circularity of protein particles>

The aspect ratio and the circularity of protein particles were measured by performing image analysis using an image photographed using a scanning electron microscope (JSM-6700F, manufactured by JEOL Ltd.). In the image analysis, the aspect ratio and the circularity of arbitrarily selected 30 protein particles observed in the image were measured using image analysis software (ImageJ/Fiji), and the arithmetic average values of the ratio and the circularity were calculated to determine the average aspect ratio and the average circularity. In addition, from the measurement results of the aspect ratio and the circularity of each protein particle, the coefficient of variation of the aspect ratio and the coefficient of variation of the circularity were calculated.

In addition, image photographing with a scanning electron microscope was performed by taking a cut section of a test specimen prepared according to the following procedure using an electron microscope (JSM-6700F, manufactured by JEOL Ltd.).

-Preparation procedure of test specimen of fermented milk in Examples-

(1) To a fluted glass (outer diameter: 19 mm, inner diameter: 9.5 mm, depth: 0.4 mm), 28 μL of a sample (fermented milk) was added dropwise, followed by coverage with a membrane filter to be brought into close contact with the sample.

(2) The sample dropwise added to the glass was immersed in a 2% glutaraldehyde solution for 1 hour, followed by washing twice with deionized water.

(3) The sample after the treatment (2) was immersed in a 1% osmium tetroxide solution for 90 minutes, followed by washing twice with deionized water.

(4) The sample after the treatment (3) was immersed in each of 30%, 50%, 60%, and 70% concentration ethanol aqueous solutions for 10 minutes × 1 time, then immersed in each of 80%, 90%, and 95% concentration ethanol aqueous solutions for 15 minutes × 1 time, and then immersed in a 100% concentration ethanol for 15 minutes × 2 times, followed by a dehydration treatment.

(5) The sample after the treatment (4) was immersed in isoamyl acetate for 20 minutes twice.

(6) The sample after the treatment of (5) was replaced with liquefied carbon dioxide using a critical point drying apparatus (JCPD-5, JEOL Ltd.) for critical point drying.

(7) The sample after the treatment (6) was cut, and the cut cross section was subjected to osmium vapor deposition using an osmium plasma coater NL-OPC80N (JEOL Ltd.) to prepare a test specimen.

-Preparation procedure of test specimen of fermented milk in Comparative Examples-

(1) A sample (fermented milk) was cut out into a size of 3 × 3 × 5 mm.

(2) The cut sample was immersed in a 2% glutaraldehyde solution for 1 hour, followed by washing twice with deionized water.

(3) The sample after the treatment (2) was immersed in a 1% osmium tetroxide solution for 90 minutes, followed by washing twice with deionized water.

(4) The sample after the treatment (3) was immersed in each of 30%, 50%, 60%, and 70% concentration ethanol aqueous solutions for 10 minutes × 1 time, then immersed in each of 80%, 90%, and 95% concentration ethanol aqueous solutions for 15 minutes × 1 time, and then immersed in a 100% concentration ethanol for 15 minutes × 2 times, followed by a dehydration treatment.

(5) The sample after the treatment (4) was immersed in isoamyl acetate for 20 minutes twice.

(6) The sample after the treatment of (5) was replaced with liquefied carbon dioxide using a critical point drying apparatus (JCPD-5, JEOL Ltd.) for critical point drying.

(7) The sample after the treatment (6) was cut, and the cut cross section was subjected to osmium vapor deposition using an osmium plasma coater NL-OPC80N (JEOL Ltd.) to prepare a test specimen.

<Production Example of raw material mix>

(Production Example 1)

Skimmed milk powder (manufactured by Meiji Co., Ltd.), a milk protein powder raw material (MPC4867, manufactured by Fonterra Co-operative Group Limited), milk (manufactured by Meiji Co., Ltd.), and cream (manufactured by Meiji Co., Ltd.) were mixed to produce a raw material mix having a fat concentration of 9.6% by mass, a protein concentration of 15.36% by mass, and a solid concentration of 42.49% by mass. This raw material mix was sterilized at 85°C for 120 seconds to produce a raw material mix of Production Example 2. The 90% particle diameter on the volume basis of the raw material mix of Production Example 1 was 1.34 $\mu$m.

(Production Example 2)

Skimmed concentrated milk (manufactured by Meiji Co., Ltd.) and raw water were mixed to produce a raw material mix having a fat concentration of 0.2% by mass, a protein concentration of 7.5% by mass, and a solid concentration of 19.7% by mass. This raw material mix was sterilized at 85°C for 120 seconds to produce a raw material mix of Production Example 2. The 90% particle diameter on the volume basis of the raw material mix of Production Example 2 was 0.25 $\mu$m.

(Production Example 3)

Skimmed concentrated milk (manufactured by Meiji Co., Ltd.) and raw water were mixed to produce a raw material mix having a fat concentration of 0.1% by mass, a protein concentration of 3.7% by mass, and a solid concentration of 10.0% by mass. This raw material mix was sterilized at 85°C for 120 seconds to produce a raw material mix of Production Example 2. The 90% particle diameter on the volume basis of the raw material mix of Production Example 2 was 0.22 $\mu$m.

<Production of fermented milk>

(Example 1)

In a fermentation tank having a capacity of 3.5 L, 2,500 g of the raw material mix of Production Example 1 was put, and the 2038 strain of Lactobacillus bulgaricus and the 1131 strain of Streptococcus thermophilus were each added as a fermented milk starter in an amount of 2.0% by mass of the raw material mix, and fermentation was performed while a mixture of the raw material mix and the fermented milk starter was stirred at a stirring rotational speed shown in the following table (fermentation step). During the fermentation step, the mixture and the fermented product of the mixture in the fermentation tank were stirred to produce a vertical circulation flow, so that the mixture and the fermented product of the mixture in the fermentation tank were stirred almost uniformly without stagnation.

Next, the fermented product after completion of fermentation was cooled until the temperature of the fermented product reached the product temperature shown in the following table while being stirred at the stirring rotational speed shown in the following table (cooling step) to yield fermented milk.

In the fermentation step and the cooling step, stirring was performed using a stirring blade having a blade diameter of 0.15 m and a rotation radius of 0.075 m. The 90% particle diameter on the volume basis of the raw material mix during the fermentation step was 125 $\mu$m or less.

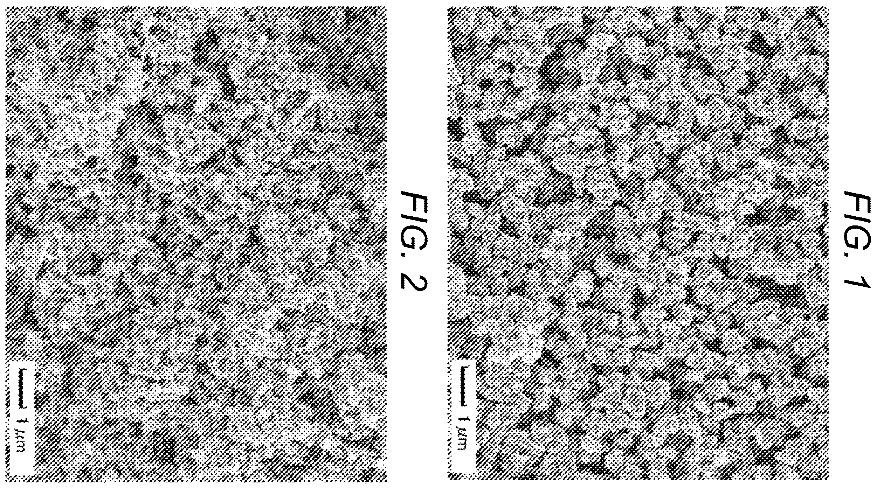

The obtained fermented milk was a liquid fermented milk. The average aspect ratio of protein particles in the obtained fermented milk was 1.27, the coefficient of variation of the aspect ratio was 21.2%, the average circularity was 0.78, and the coefficient of variation of the circularity was 14%. Fig. 1 shows a scanning electron microscope image (magnification: 10,000 times) of protein particles.

The fermented milk had a 90% particle diameter on the volume basis of 23.65 $\mu$m, a 10% particle diameter on the number basis of 0.056 $\mu$m, a 50% particle diameter on the number basis of 0.085 $\mu$m, a 90% particle diameter on the number basis of 0.151 $\mu$m, and a viscosity at 10°C of 358 mPa·s. That is, it was possible to produce a liquid fermented milk which had a low viscosity and in which a visually observed aggregated precipitate was hardly observed even when a curd breaking treatment or the like was not performed after cooling. In addition, the texture of the fermented milk was smooth.

The fermented milk was placed in a cup for sterilization inspection (BE2200 manufactured by EIKEN CHEMICAL CO., LTD., container size: upper diameter 58 mm, lower diameter 56 mm, height 72 mm, capacity 100 ml), and stored at a temperature of 10°C in a state of being left standing. The viscosity after 7 days from the start of storage was 373 mPa·s, and the viscosity after 14 days was 331 mPa·s. The viscosity change after long-term storage was so small that the storage stability was excellent.

[Table 1]

|  | Time (min) | Stirring rotational speed (rpm) | Reynolds number | Product temperature (°C) |
|---|---|---|---|---|
| Fermentation step | 0 (start of fermentation) | 75 | 31 | 44.6 |
|  | 60 | 68 | - | 42.9 |
|  | 180 | 72 | - | 43.7 |
|  | 940 | 68 | - | 43.1 |
|  | 1020 (end of fermentation) | 68 | 4 | 43.8 |
| Cooling step | Start of cooling | 70 | - | 43.8 |
|  | End of cooling | 70 | 78 | 2.9 |

(Example 2)

In a fermentation tank having a capacity of 3 L, 2,000 g of the raw material mix of Production Example 2 was put, and the 2038 strain of Lactobacillus bulgaricus and the 1131 strain of Streptococcus thermophilus were each added as a fermented milk starter in an amount of 2.0% by mass of the raw material mix, and fermentation was performed while a mixture of the raw material mix and the fermented milk starter was stirred at a stirring rotational speed shown in the following table (fermentation step). During the fermentation step, the mixture and the fermented product of the mixture in the fermentation tank were stirred to produce a vertical circulation flow, so that the mixture and the fermented product of the mixture in the fermentation tank were stirred almost uniformly without stagnation.

Next, the fermented product after completion of fermentation was cooled until the temperature of the fermented product reached the product temperature shown in the following table while being stirred at the stirring rotational speed shown in the following table (cooling step) to yield fermented milk.

In the fermentation step and the cooling step, stirring was performed using a stirring blade having a blade diameter of 0.11 m and a rotation radius of 0.055 m. The 90% particle diameter on the volume basis of the raw material mix during the fermentation step was 125 μm or less.

The obtained fermented milk was a liquid fermented milk. The average aspect ratio of protein particles in the obtained fermented milk was 1.29, the coefficient of variation of the aspect ratio was 20.1%, the average circularity was 0.83, and the coefficient of variation of the circularity was 10.9%. The fermented milk had a 90% particle diameter on the volume basis of 8.53 μm, a 10% particle diameter on the number basis of 0.056 μm, a 50% particle diameter on the number basis of 0.084 μm, a 90% particle diameter on the number basis of 0.146 μm, and a viscosity at 10°C of 58 mPa·s. That is, it was possible to produce a liquid fermented milk which had a low viscosity and in which a visually observed aggregated precipitate was hardly observed even when a curd breaking treatment or the like was not performed after cooling. In addition, the texture of the fermented milk was smooth. The fermented milk had a small change in viscosity after long-term storage, and thus was excellent in storage stability.

[Table 2]

|  | Time (min) | Stirring rotational speed (rpm) | Reynolds number | Product temperature (°C) |
|---|---|---|---|---|
| Fermentation step | 0 (start of fermentation) | 100 | 7,666 | 36.0 |
|  | 60 | 100 | - | 34.2 |
|  | 180 | 100 | - | 34.3 |
|  | 300 | 100 | - | 34.1 |
|  | 585 (end of fermentation) | 100 | 229 | 34.1 |

(continued)

|  | Time (min) | Stirring rotational speed (rpm) | Reynolds number | Product temperature (°C) |
|---|---|---|---|---|
| Cooling step | Start of cooling | 100 | - | 34.1 |
|  | End of cooling | 100 | 687 | 9.1 |

(Example 3)

In a fermentation tank having a capacity of 3 L, 2,000 g of the raw material mix of Production Example 3 was put, and the 2038 strain of Lactobacillus bulgaricus and the 1131 strain of Streptococcus thermophilus were each added as a fermented milk starter in an amount of 2.0% by mass of the raw material mix, and fermentation was performed while a mixture of the raw material mix and the fermented milk starter was stirred at a stirring rotational speed shown in the following table (fermentation step). During the fermentation step, the mixture and the fermented product of the mixture in the fermentation tank were stirred to produce a vertical circulation flow, so that the mixture and the fermented product of the mixture in the fermentation tank were stirred almost uniformly without stagnation.

Next, the fermented product after completion of fermentation was cooled until the temperature of the fermented product reached the product temperature shown in the following table while being stirred at the stirring rotational speed shown in the following table (cooling step) to yield fermented milk.

In the fermentation step and the cooling step, stirring was performed using a stirring blade having a blade diameter of 0.11 m and a rotation radius of 0.055 m. The 90% particle diameter on the volume basis of the raw material mix during the fermentation step was 125 $\mu$m or less.

The obtained fermented milk was a liquid fermented milk. The average aspect ratio of protein particles in the obtained fermented milk was 1.29, the coefficient of variation of the aspect ratio was 22.1%, the average circularity was 0.78, and the coefficient of variation of the circularity was 8.7%. The fermented milk had a 90% particle diameter on the volume basis of 11.83 $\mu$m, a 10% particle diameter on the number basis of 0.055 $\mu$m, a 50% particle diameter on the number basis of 0.083 $\mu$m, a 90% particle diameter on the number basis of 0.141 $\mu$m, and a viscosity at 10°C of 7 mPa·s. That is, it was possible to produce a liquid fermented milk which had a low viscosity and in which a visually observed aggregated precipitate was hardly observed even when a curd breaking treatment or the like was not performed after cooling. In addition, the texture of the fermented milk was smooth. The fermented milk had a small change in viscosity after long-term storage, and thus was excellent in storage stability.

[Table 3]

|  | Time (min) | Stirring rotational speed (rpm) | Reynolds number | Product temperature (°C) |
|---|---|---|---|---|
| Fermentation step | 0 (start of fermentation) | 150 | 11,499 | 30.1 |
|  | 60 | 150 | - | 30.0 |
|  | 240 | 150 | - | 28.3 |
|  | 410 | 150 | - | 28.3 |
|  | 1180 (end of fermentation) | 150 | 11,959 | 28.3 |
| Cooling step | Start of cooling | 150 | - | 28.3 |
|  | End of cooling | 150 | 8,542 | 9.9 |

(Example 4)

In a fermentation tank having a capacity of 3.5 L, 2,500 g of the raw material mix of Production Example 2 was put, and the 2038 strain of Lactobacillus bulgaricus and the 1131 strain of Streptococcus thermophilus were each added as a fermented milk starter in an amount of 2.0% by mass of the raw material mix, and fermentation was performed while a mixture of the raw material mix and the fermented milk starter was stirred at a stirring rotational speed shown in the following table (fermentation step). During the fermentation step, the mixture and the fermented product of the mixture in the fermentation tank were stirred to produce a vertical circulation flow, so that the mixture and the fermented product of the mixture in the fermentation tank were stirred almost uniformly without stagnation.

Next, the fermented product after completion of fermentation was cooled until the temperature of the fermented product reached the product temperature shown in the following table while being stirred at the stirring rotational speed shown in the following table (cooling step) to yield fermented milk.

In the fermentation step and the cooling step, stirring was performed using a stirring blade having a blade diameter of 0.15 m and a rotation radius of 0.075 m. The 90% particle diameter on the volume basis of the raw material mix during the fermentation step was 125 μm or less.

The obtained fermented milk was a liquid fermented milk. The average aspect ratio of protein particles in the obtained fermented milk was 1.22, the coefficient of variation of the aspect ratio was 11.2%, the average circularity was 0.82, and the coefficient of variation of the circularity was 7.6%. The fermented milk had a 90% particle diameter on the volume basis of 25.41 μm, a 10% particle diameter on the number basis of 0.056 μm, a 50% particle diameter on the number basis of 0.087 μm, a 90% particle diameter on the number basis of 0.159 μm, and a viscosity at 10°C of 66 mPa·s. That is, it was possible to produce a liquid fermented milk which had a low viscosity and in which a visually observed aggregated precipitate was hardly observed even when a curd breaking treatment or the like was not performed after cooling. In addition, the texture of the fermented milk was smooth. The fermented milk had a small change in viscosity after long-term storage, and thus was excellent in storage stability.

[Table 4]

| | Time (min) | Stirring rotational speed (rpm) | Reynolds number | Product temperature (°C) |
|---|---|---|---|---|
| Fermentation step | 0 (start of fermentation) | 60 | 2,322 | 28.5 |
| | 60 | 60 | - | 34.3 |
| | 120 | 60 | - | 35.3 |
| | 180 | 100 | 31 | 36.5 |
| | 240 | 100 | 179 | 37.0 |
| | 300 | 100 | 251 | 37.0 |
| | 360 (end of fermentation) | 100 | 295 | 36.5 |
| Cooling step | Start of cooling | 100 | - | 36.5 |
| | End of cooling | 100 | 602 | 5.0 |

(Comparative Example 1)

In a fermentation tank having a capacity of 2 L, 1,000 g of the raw material mix of Production Example 1 was put, and the 2038 strain of Lactobacillus bulgaricus and the 1131 strain of Streptococcus thermophilus were each added as a fermented milk starter in an amount of 2.0% by mass of the raw material mix, and fermentation was performed while the mixture of the raw material mix and the fermented milk starter was left standing. The fermentation was performed at a temperature of about 43°C until the pH of the fermented product reached 4.8 or less. The fermented product after completion of fermentation was subjected to curd breaking and then homogenization treatment under conditions of a primary pressure of 10 MPa and a secondary pressure of 5 MPa to yield fermented milk. The viscosity of the obtained fermented milk was 43,200 mPa·s. The average aspect ratio of protein particles in the obtained fermented milk was 1.92, the coefficient of variation of the aspect ratio was 41%, the average circularity was 0.54, and the coefficient of variation of the circularity was 42%. In Comparative Example 1, the raw material mix in the fermentation tank was in a lump state during fermentation, and formed firm curds. It was difficult to break the curds after fermentation. Fig. 2 shows a scanning electron microscope image (magnification: 10,000 times) of protein particles. The fermented milk had a large change in viscosity after long-term storage, and thus was poor in storage stability.

(Comparative Example 2)

A fermented milk was obtained in the same manner as in Comparative Example 1 except that the raw material mix of Production Example 2 was used and homogenization treatment was performed under conditions of a primary pressure of 5 MPa and a secondary pressure of 1 MPa. The viscosity of the obtained fermented milk was 2,960 mPa·s. The average aspect ratio of protein particles in the obtained fermented milk was 2.04, the coefficient of variation of the aspect ratio was 40.9%, the average circularity was 0.43, and the coefficient of variation of the circularity was 55.4%. In Comparative Example 2, the raw material mix in the fermentation tank was in a lump state during fermentation, and formed firm curds. It was difficult to break the curds after fermentation. The fermented milk had a large change in viscosity after long-term storage, and thus was poor in storage stability.

(Comparative Example 3)

A fermented milk was obtained in the same manner as in Comparative Example 1 except that the raw material mix of Production Example 3 was used and homogenization treatment was performed under conditions of a primary pressure of 5 MPa and a secondary pressure of 1 MPa. The viscosity of the obtained fermented milk was 1,127 mPa·s. The average aspect ratio of protein particles in the obtained fermented milk was 1.85, the coefficient of variation of the aspect ratio was 40.3%, the average circularity was 0.49, and the coefficient of variation of the circularity was 47.5%. In Comparative Example 3, the raw material mix in the fermentation tank was in a lump state during fermentation, and formed firm curds. It was difficult to break the curds after fermentation. The fermented milk had a large change in viscosity after long-term storage, and thus was poor in storage stability.

**Claims**

1. A fermented milk containing protein particles,
   wherein an average aspect ratio of the protein particles is 1.0 to 1.8.

2. The fermented milk according to claim 1, wherein the protein particles have an average circularity of 0.6 or more.

3. The fermented milk according to claim 2, wherein a coefficient of variation of circularity of the protein particles is 40% or less.

4. The fermented milk according to claim 1 or 2, wherein the protein particles have a coefficient of variation of a aspect ratio of 40% or less.

5. The fermented milk according to claim 1 or 2, wherein a 50% particle diameter on a number basis of the protein particles is 1.0 µm or less.

6. The fermented milk according to claim 1 or 2, wherein a ratio of a 90% particle diameter on a number basis of the protein particles to a 50% particle diameter on a number basis of the protein particles is 1.0 to 5.0.

7. The fermented milk according to claim 1 or 2, wherein an absolute value of a difference between a 50% particle diameter on a number basis of the protein particles and a mode diameter on a number basis of the protein particles is 1.0 µm or less.

8. The fermented milk according to claim 1 or 2, wherein an absolute value of a difference between a 90% particle diameter on a number basis of the protein particles and a mode diameter on a number basis of the protein particles is 5.0 µm or less.

9. The fermented milk according to claim 1 or 2, wherein a content of protein is 10% by mass or more.

10. The fermented milk according to claim 1 or 2, having a viscosity at 10°C of 5,000 mPa·s or less.

11. The fermented milk according to claim 1 or 2, being a liquid fermented milk.

## FIG. 1

## FIG. 2

## INTERNATIONAL SEARCH REPORT

| International application No. |
|---|
| **PCT/JP2024/009706** |

| A. | CLASSIFICATION OF SUBJECT MATTER |
|---|---|

*A23C 9/123*(2006.01)i
FI: A23C9/123

According to International Patent Classification (IPC) or to both national classification and IPC

| B. | FIELDS SEARCHED |
|---|---|

Minimum documentation searched (classification system followed by classification symbols)

A23C9/12

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2018-201401 A (MEIJI CO., LTD.) 27 December 2018 (2018-12-27) claims, paragraphs [0020], [0023], [0039]-[0043], examples | 1-11 |
| Y | JP 2018-161114 A (FUJICCO CO., LTD.) 18 October 2018 (2018-10-18) claims, paragraphs [0018]-[0026], examples | 1-11 |
| A | JP 2023-506766 A (GLANBIA NUTRITIONALS LIMITED) 20 February 2023 (2023-02-20) | 1-11 |
| A | JP 2021-141853 A (MEGMILK SNOW BRAND CO., LTD.) 24 September 2021 (2021-09-24) | 1-11 |
| A | PARNELL-CLUNIES, Estelle et al. Microstructure of yogurt as affected by heat treatment of milk. MILK SCIENCE INTERNATIONAL. 1987, vol. 42, no. 7, pp. 413-417 | 1-11 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **22 May 2024** | **04 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/009706**

| Patent document cited in search report | | | Publication date (day/month/year) | Patent family member(s) | | | Publication date (day/month/year) |
|---|---|---|---|---|---|---|---|
| JP | 2018-201401 | A | 27 December 2018 | (Family: none) | | | |
| JP | 2018-161114 | A | 18 October 2018 | (Family: none) | | | |
| JP | 2023-506766 | A | 20 February 2023 | US | 2022/0346396 | A1 | |
| | | | | WO | 2021/119540 | A1 | |
| | | | | EP | 4072297 | A1 | |
| | | | | CN | 115087354 | A | |
| | | | | KR | 10-2022-0165721 | A | |
| JP | 2021-141853 | A | 24 September 2021 | (Family: none) | | | |

Form PCT/ISA/210 (patent family annex) (July 2022)

**EP 4 681 545 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021141853 A